# EUROPEAN PATENT APPLICATION

(11) **EP 1 271 367 A1**
(43) Date of publication of application: **02.01.2003**
(21) Application number: 01115934.0
(22) Date of filing: 29.06.2001
(51) Int. Cl.: G06F 17/60

(54) **Apparatus and method for enabling a user of a mobile device to decide on possible tasks**

(71) Applicant: SIEMENS AKTIENGESELLSCHAFT, 80333 München (DE)
(72) Inventor: Beck, Heinrich, 72766 Reutlingen (DE); Lissmann, Florian, 80333 München (DE); Müller, Axel, 81241 München (DE); Bauer, Bernhard, Dr., D-82024 Taufkirchen (DE)

(57) **Abstract**

The invention suggests an apparatus and method for enabling via a radio communication network a user of a mobile device, that is able to communicate via the radio communication network, to decide on possible tasks by supplying the mobile device with task information representing tasks that can be initiated by or via the radio communication network, wherein task suggestion data, representing at least one suggestion for at least one task that can be performed in view of context data representing the present context of the user of the mobile device (especially time and location) and in view of predetermined user data (=personalized data) concerning the user, is generated,
wherein generated task suggestion data is sent to the mobile device for enabling the device to request from its user input of decision data representing the user's decision on which task to be performed,
wherein the decision data is transferred from the mobile device via the radio communication network to a another recipient for enabling performing the task defined by the decision data.

## Description

The invention concerns an apparatus and method for enabling via a user of a mobile device to decide on possible tasks.

The object of the invention is to suggest to a user of a mobile device possible tasks that can be initiated on behalf of the user, wherein for generating the suggestion of tasks the situation (context) of the user and stored user data are considered.

An example for implementing the invention is described in the following specification and the drawings wherein the figures show:
Figure 1 an overview of the different types of available platforms and their relations to an MSP (mobile service platform)
Figure 2 a flowchart
Figure 3 a general physical architecture
Figure 4 the information flow between involved components
Figure 5 a table representing the information flow between components
Figure 6 a component view

The location of a user can be determined, i.e. some external component delivers location information, either based on cell information of the user's mobile phone or on GPS. A user can be always on, i.e. WAP or GSM are not applicable for the developed system, but GPRS or UMTS are available including appropriate end-user devices for these technologies

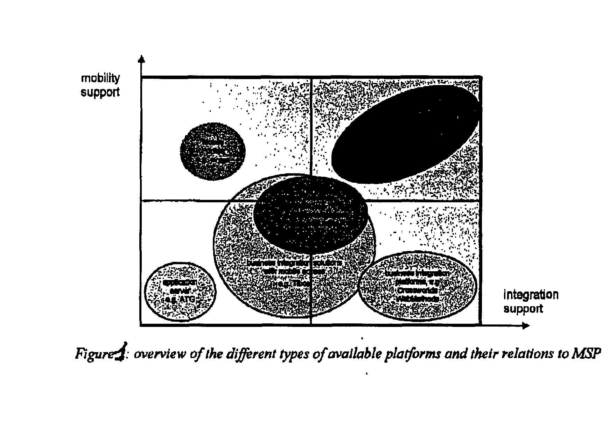

An overview of the different types of available platforms and their relations to an MSP (=mobile service platform = invented apparatus) can be found in the figure 1.

Platforms are categorized concerning integration support and mobility support Integration support subsumes the ability to easily integrate existing legacy systems, like SAP or travel services. Mobility support is the ability of a system to support the user on the one hand with mobile access and on the other hand integrates mobile workflow. According to these characterization application server platforms, like ATG, offer only small mobility support and integration support. However these platforms are a good basis for any kind of service and solution development. Mobile portals or mobile portal components, like evygo, support in particular the mobile access to back-office systems. Crosswolds or WebMethods as any other business integration platform deal with the integration of back-office legacy software e.g. SAP or SIEBEL with application interfaces independent of the underlying legacy system. Some business integration platforms also support mobile access, e.g. Tibco. Special kinds of these platforms are e/m Commerce platforms allowing the integration of back-office solutions for electronic commerce and supporting partially mobile access.

The MSP platform offers in contrast to these platforms mobility support, i.e. customizable end-to-end support for mobile processes including e.g. travel times, task lists and appointment, and based on business integration platforms the integration of legacy systems, like SAP, but in addition other vertical services, like travel, task scheduling or work coordination.

The question, which platform to use cannot be simply answered and should be the subject of a product evaluation after the more detailed requirements definition of an MSP (invented mobile service platform).

The price of the platform is always a drop in the bucket compared to the total cost of the project. This is defined as the price of the server platform, the cost to train developers, the cost to build and evolve the MSP solution on that platform and the cost to maintain the solution. The total cost of ownership of a project outweighs any short-term cost differences between underlying platforms. We recommend you do not consider the price of the platform but rather consider the more important other factors:
- Time-to-market features, when developing a commerce solution in today's marketplace, a few months of time is an eternity. Missing a small window of opportunity is the difference between a corporation that is first to market, and a corporation that must play catch-up for years. One way to speed time to market is to choose an EBI platform that allows rapid application development. This enables developers to write and maintain code quickly, lowering development time.
- Single vendor solution, when building a solution on an EBI platform, in general you should always prefer to have a single-vendor solution. A single vendor solution is usually more reliable, interoperable, and less error-prone than a two-vendor bridged solution.
- Support for existing systems, most large corporations have existing code written in a variety of languages, and have a number of legacy systems, such as CICS/COBOL, C++, SAP R/3, and Siebel. It is vital that corporations be given an efficient, rapid path to preserve and reuse these investments. After all, it is likely that businesses will have neither the funds nor the time to reinvent all existing systems. This legacy integration often is one of the most challenging (if not the most challenging) tasks to overcome when building a MSP solution.
- Market Perception, when comparing two platforms, your first instinct is probably to compare the technologies. The unfortunate reality is that good technology rarely succeeds in the marketplace because it's good technology. Usually it's the technology with the best marketing that wins.
- Maturity of platform, organizations that adopt a EBI platform must consider the maturity of the underlying platform. A less mature, earlier-generation platform is more prone to errors and problems.

Even if many of the small manufacturers can surely offer better technical solutions within certain ranges, with reference to the factors above a pre-selection in favor of the large manufacturers must be done. The most promising and most complete solutions are offered by:
• BEA
• IBM
• ORACLE
• ATG
• Microsoft

While BEA, IBM, ORACLE and ATG are based on the J2EE-standard, Microsoft relies on their NET-strategy. Furthermore a decision must be made, which technical standard should be used:
- Microsoft's .NET
- SUN's J2EE

While J2EE is being marketed by an entire industry .NET is a single-vendor-solution from Microsoft but has Microsoft's A-team marketing behind it. Both platforms offer a low system cost, such as jBoss/Linuxt for J2EE, or Windows/Win32 hardware for .NET and scalability is theoretically unlimited. The arguments for and against both platforms should also be a subject of further evaluation.

### Innovation

The objective of the MSP (invented mobile service platform) is to develop a highly dynamic, generic and intelligent integration platform for mobile professionals or workers (e.g. sales or technical work forces) based on standard vertical services on top of existing standard platforms, like business integration systems or workflow systems. I.e. in particular not only a mobile access to the services is offered, but an intelligent integration of mobility support. Moreover the integration of enterprise legacy software like SAP or SIEBEL is based on standard integration platforms. Furthermore MSP uses existing components for multi-access to the system. I.e. MSP offers an end-to-end support for mobility processes including mobility services like traveling and traffic information as well as task coordination and scheduling and combining these services with the customized mobile workflow based on context dependent behavior. Repeating the figure on the platform portfolio, MSP is the highest possible integration of existing software services and systems with mobility support whereby existing software platforms and components support this complex integration.

The unique selling point of MSP is based on the following innovations:
- end-to-end support of mobile processes
- added value services supporting
- tracking the user, i.e. the actual time and the actual position where the user should be at this moment is compared with the actual position of the user,
- situation awareness and retask, i.e. depending on the current situation, e.g. time, position, tasks to be performed in the future; specific task options are triggered in order to help to fulfill the schedule of a user if some extraordinarities occurs like a traffic jam on the way to the next customer or a task takes longer than expected,
- automating standard procedures, i.e. using knowledge about the working and travel times, the position of a user, the performed work or the consumption of some material, to do e.g. semi-automatic reporting of the travel, travel costs, and ordering of new material
- with generic interfaces for mobility specific services, i.e. standardized interface to mobility services, like traveling, monitoring of travels, mobile offices, and unified messaging allow to integrate any kind of mobility supporting services depending on the customers requirements
- highly extendable and customizable framework for services and processes
- to the specific requirements of a company, sales or work forces and
- to the end-user specific requirements of an individual mobile professional
- multi-level personalization, in particular
- personalization on the mobile process level
- personalization at the end-user's integrated service portfolio,
- personalization at the end-user's user interface
- personalization at the individual service level, taking preferences of the mobile professional into account like preferred roads, routes and hotels

One important issue is the privacy of the collected sensitive data, like the tracking data such that the company cannot analyze them and are only accessible by the user.

In contrast to existing prototypes combining some vertical services, like personal travel assistance with semi-automatic meeting scheduling the objective of MSP is the development of a highly dynamic, generic and intelligent framework customizable to different customers and extended with new services and applications of the individual customer enterprise, i.e. the focus of MSP is the highly generic approach in comparison to the hard coded behavior of existing prototypes.

### Technical System Description

An MSP can be implemented e.g. in 3 phases:
phase 1: Appointment and task list, individual traffic route planner, unified messaging, possible adaptors can be developed for Map & Guide with monitoring component, Siemens unified messaging or Microsoft Outlook.

For the phase 2 and 3 the supported / integrated vertical services could be
• phase 2: e.g. automated appointment and task scheduling (work coordination) and resource planning
• phase 3: e.g. automatic reporting, knowledge management

### Use Case View and underlying Mobility Logic

### In this section a typical use case (e.g. for the first phase) is given

### Use Case: Extraordinarities

The user is guided to the first/next client using dynamic information about the current traffic situation. The arrival at the client is recognized and the arrival time is added to the calendar; moreover the route length is added to the costs. The user and his/her schedules are tracked concerning the work periods and the traffic situation to the next client. If extraordinarities occur, i.e. the task could not be finished in time or a traffic jam on the route to the next user is recognized, a re-scheduling of the tasks is automatically performed, i.e. the system automatically starts the scheduling of the tasks for the selected day according to the preferences of the user, e.g. specific times for lunch or preferred routes, and the constraints given by the clients, e.g. only at home in the morning between 9am and 11am. The scheduling is either performed on the server or on the end-user device of the user. For the scheduling of the tasks the routes to the customers are requested from the server based on dynamic and forecasted route information. After re-scheduling the tasks, the next clients are informed with unified messaging about the approximated arrival times of the service staff. After finishing the task the end time is added to the calendar and the user gets automatically the next task with the route based on the current traffic situation.

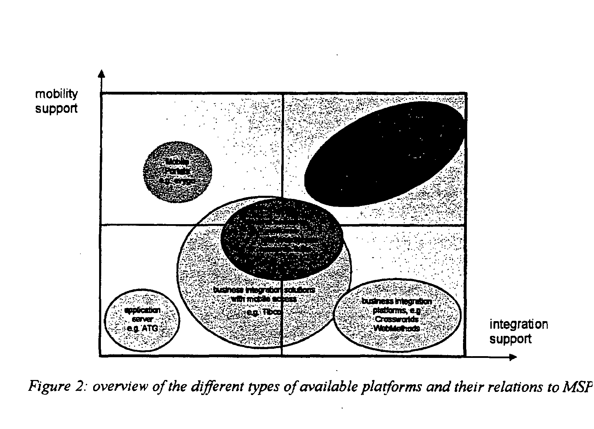

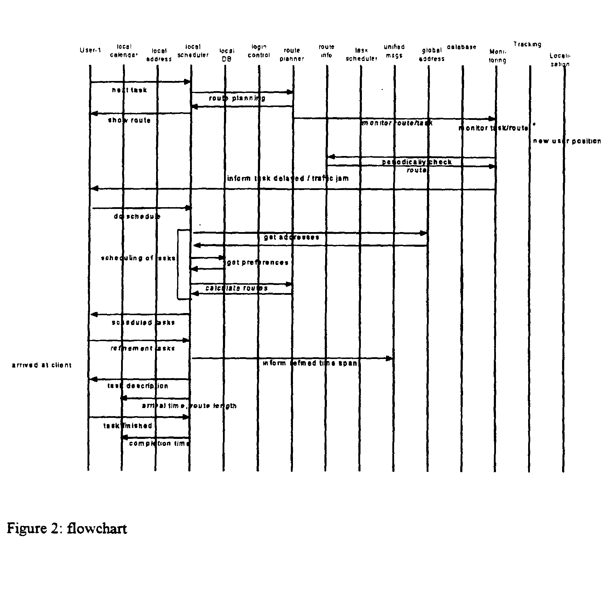

The information flow for this use case is shown in the flowchart in Figure 2.

### General hardware architecture

### Physical architecture

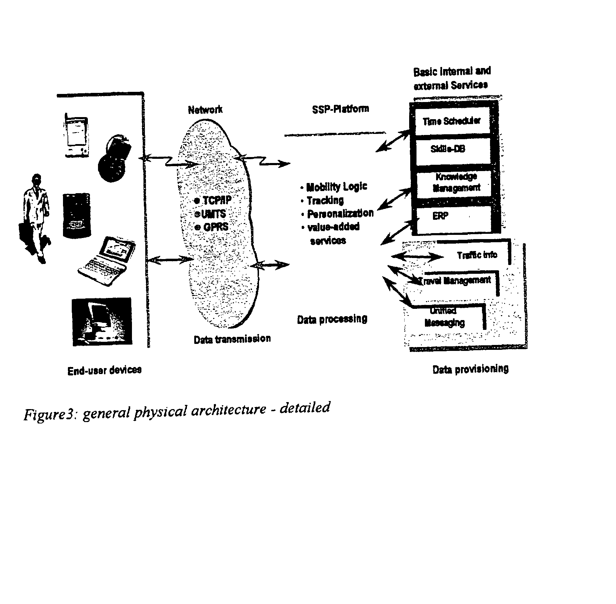

The general architecture of the MSP platform and its integration with the end user device and service landscape is shown in figure 3

This figure shows the different kinds of end-user devices ranging from devices only supporting some browser (thin client) to devices with fast CPUs and large memory running a client application communicating with the MSP via TCP/IP based on e.g. UMTS or GPRS (thick client). The MSP platform is connected to selected internal services and external services responsible for data provisioning. The heart of the system is the MSP platform supporting the mobility logic, tracking of the user and tasks, multi-level personalization and providing value-added services.

### Information flow within physical architecture

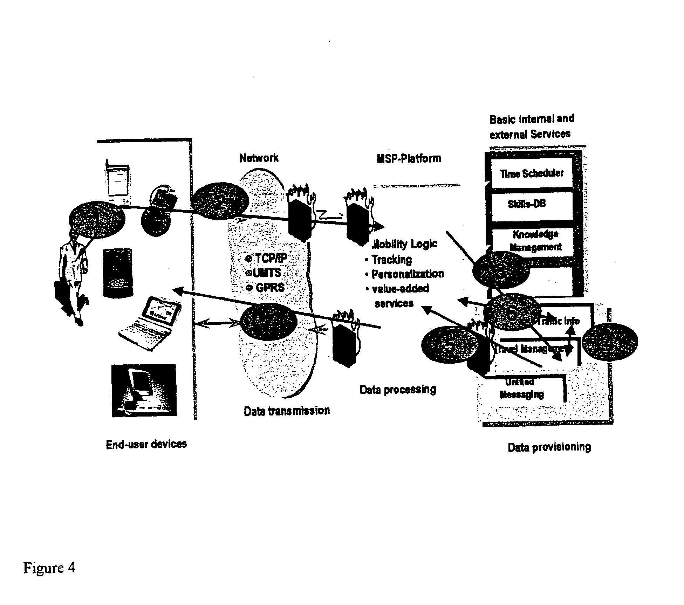

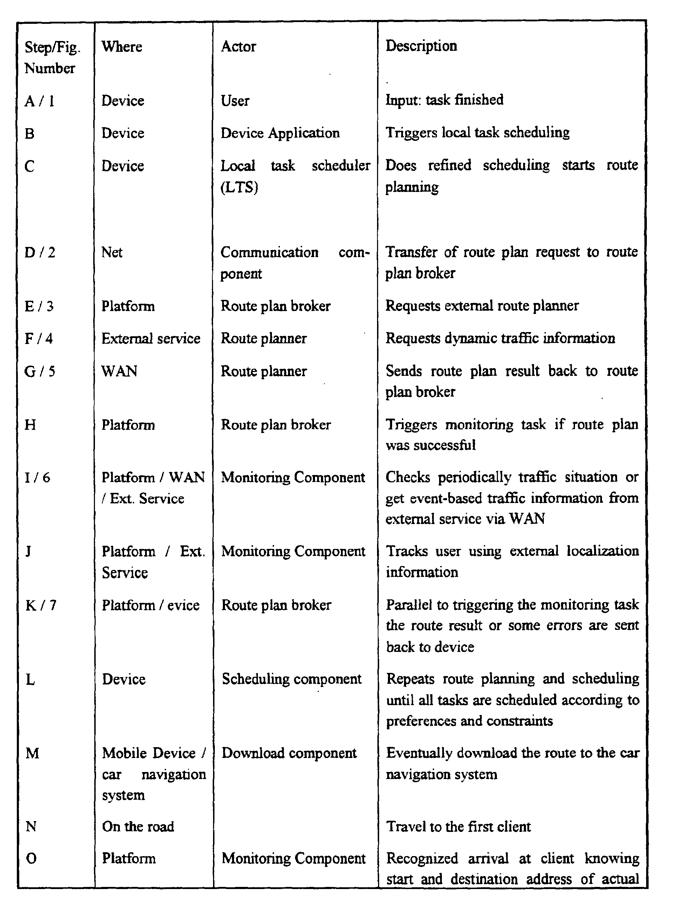

Based on the physical architecture the information flow architecture is shown in Figure 4.The information flow architecture is based on the third use case.

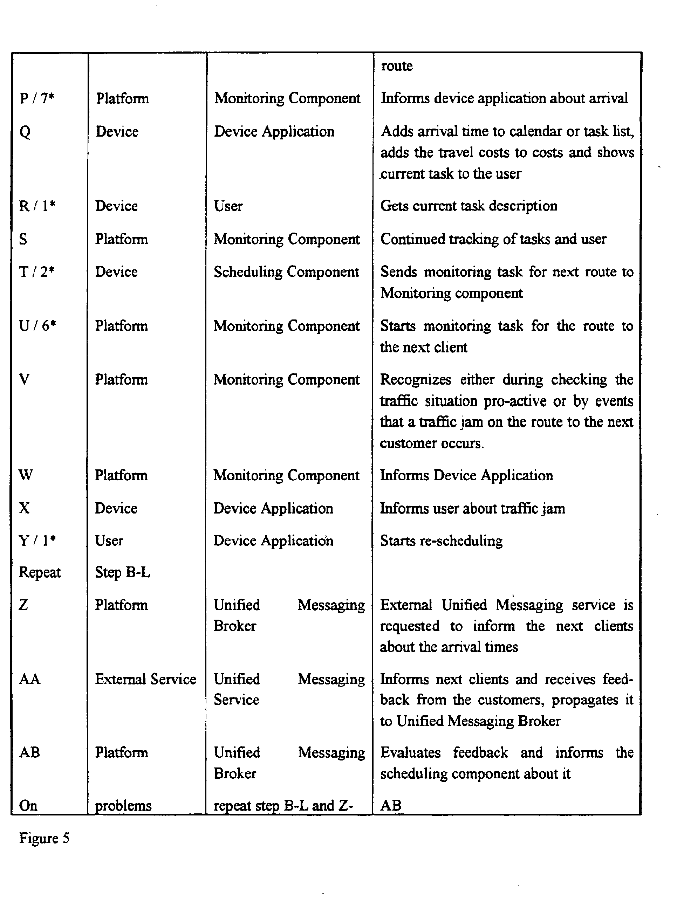

The information flow is summarized in the table in Figure 5 (5a, 5b).
Description of Figure 5: The user commits his/her actual task at the user interface resulting at the end-user device application (1), e.g. a task scheduling component, to trigger a dynamic route planning at the server based on the current traffic situation (2).

The server delivers this request to some external service provider for route planning (3, 4)

The results from the external service are sent back to the MSP platform (5) starting automatically a monitoring of the actual route, i.e. the actual route is checked (6) either periodically or based on a event mechanism of the traffic information provider (e.g. RDS/TMC messages) if there is e.g. a traffic jam on the route to the next client. Moreover the user is tracked, i.e. the current position of the user is checked permanently based on the information from the (external) positioning system.

The route plan result is sent back to the device of the user of MSP (7) who can either download the route to the car navigation system (not depicted in the figure) or uses the information to drive to the next client. I.e. the user is guided to the first/next client using dynamic information about the current traffic situation.

The arrival at the client is recognized by the tracking component knowing the start and destination address, giving this information to the end-user device software results in adding the arrival time to the calendar (like 7); moreover the route length known from the route planning is added to the costs at the end-user device.

The user and his/her schedules are tracked concerning the work periods, i.e. a component checks periodically whether the position of the user is unchanged (like 6 with different external positioning service), if the position of the user changes before the task was finished, the user is asked whether the task is already finished, then the system automatically finishes the task otherwise the tracking component waits until the user is back at the working place. This can happen if the user fetches something to eat. In addition the traffic situation to the next client is monitored (like 6). I.e. the client software starts after the beginning of the task at the client a request for monitoring the route to the next customer, based on the current address and the address of the next client as described above (delivered from the task description at the end-user device software, like 2).

If extraordinarities occur, i.e. the task could not be finished in time or a traffic jam on the route to the next user; the monitoring component and tracking component at the server recognize this. Depending on the new traffic situation, e.g. the driving takes 30 minutes longer, a re-scheduling of the tasks is automatically performed, i.e. the tasks are sorted according the preferences and the travel times and the already schedule.

After re-scheduling the tasks, the next clients are informed with unified messaging about the approximated arrival times of the service staff. Therefore the information about the next clients is supported by e.g. the task list with the task description and the addresses of the customers.

The end-user device with the new arranged schedule delivers therefore the information about the reachability of the customers and the calculated arrival times to the unified messaging system, which then contacts the customers.

A feedback about the message sent to the user is delivered from the unified messaging service to the MSP platform which uses the information about success and failure to inform the MSP user and to do eventually a new scheduling of the tasks with minimal changes to the actual one.

After finishing the task triggered by the user the end time (getting from a clock on the mobile device) is added to the calendar and the user gets automatically the next task with the route based on the current traffic situation as described at the beginning.

### Component View

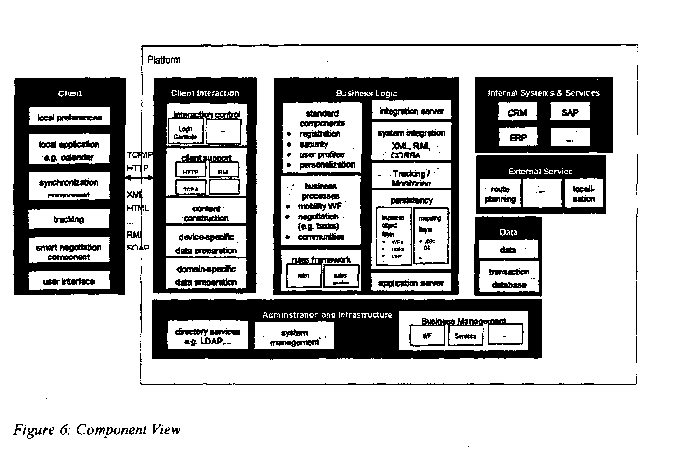

The detailed architecture with different components can be found in the figure 6.

## Claims

1. Method for enabling, via a radio communication network, a user of a mobile device, that is able to communicate via the radio communication network,
to decide on possible tasks by supplying the mobile device with task information representing tasks that can be initiated by or via the radio communication network,
wherein task suggestion data, representing at least one suggestion for at least one task that can be performed in view of context data representing the present context of the user of the mobile device and in view of predetermined user data concerning the user, is generated,
wherein generated task suggestion data is sent to the mobile device for enabling the device to request from its user the input of decision data representing the user's decision on which task to be performed,
wherein the decision data is transferred from the mobile device via the radio communication network to a another recipient for enabling performing the task defined by the decision data.

2. Method according to claim 1, wherein the radio communication network is a cellular mobile communication network and wherein the mobile device is a mobile station of a cellular mobile communication network.

3. Method according to any of the preceding claims, wherein the user data is stored in the radio communication network or accessible for the radio communication network.

4. Method according to any of the preceding claims, wherein data from data bases of transport providers concerning available means of transport is requested and used for generating task suggestion data to be sent to the mobile device, preferably for generating task suggestion data representing available flights or plains or trains or hotel rooms to be sent to the mobile device.

5. Method according to any of the preceding claims, wherein the task suggestion data represents at least two tasks wherein the user's mobile device requests the user to enter a decision on which task to perform.

6. Method according to any of the preceding claims, wherein a task comprises modifying the schedule of the user of the mobile device according to the decision data.

7. Method according to any of the preceding claims, wherein a task comprises that the radio communication network starts or initiates informing a recipient on changes in the schedule of the user, wherein the which is a wireless, internet or other communication device of a third party.

8. Method according to any of the preceding claims, wherein at least one communication address, especially a telephone number or email-address of a recipient is taken from user data of the user stored in or available for the radio communication network and used for sending information.

9. Method according to any of the preceding claims, wherein task suggestion data is generated based on user data which was entered and stored by or for the user before.

10. Method according to any of the preceding claims, wherein the user data of a user represents preferences of the user concerning requested a modification of his schedule.

11. Method according to any of the preceding claims, wherein the user data of a user represents preferences of the user concerning preferred means of transportation.

12. Method according to any of the preceding claims, wherein the user data of a user represents at least one communication address, especially a telephone number or email-address of a recipient for whom the schedule of the user comprises an entry of a meeting.

13. Method according to any of the preceding claims, wherein the context data comprises information on a last measured location of the user.

14. Method according to any of the preceding claims, wherein the context data is compared to expected context data and wherein the result of this comparison is used for generating suggestion data.

15. Method according to claim 14, wherein context data comprising position data representing the position of the user's mobile device is compared to expected context data representing the expected position of the user's mobile device and wherein the result of this comparison is used for generating suggestion data concerning a modification in a schedule or a reservation of a means of transport.

16. Method according to any of the preceding claims, wherein the decision data represents a decision for a request to modify the schedule and/or tickets for a means of transportation and/or for a check-in in a means of transportation.

17. Method according to any of the preceding claims, wherein the decision data comprises a request for booking a later means of transport than a means that was booked already.

18. Method according to any of the preceding claims, wherein the decision data comprises a request to inform a recipient on changes in the user's schedule which changes concern the recipient.

19. Method according to any of the preceding claims, wherein decision data is sent to a server of a transport provider for initiating booking and/or reservation and/or cancelling a flight or train or car or hotel.

20. Method according to any of the preceding claims, wherein the user's device receives a confirmation concerning whether the task was or will be performed successfully.

21. Apparatus, preferably for performing a method according to any of the preceding claims,
for enabling via a radio communication network a user of a mobile device, that is able to communicate via the radio communication network, to decide on possible tasks by supplying the mobile device with task information representing tasks that can be initiated by or via the radio communication network,
wherein task suggestion data, representing at least one suggestion for at least one task that can be performed in view of context data representing the present context of the user of the mobile device and in view of predetermined user data (=personalized data) concerning the user, is generated,
wherein generated task suggestion data is sent to the mobile device for enabling the device to request from its user input of decision data representing the user's decision on which task to be performed,
wherein the decision data is transferred from the mobile device via the radio communication network to a another recipient for enabling performing the task defined by the decision data.

22. Apparatus, preferably according to claim 21, wherein the apparatus comprises:
- a storage for a database with user data concerning a user,
- a task suggestion data generation means for generating task suggestion data for the user considering at least stored user data of the user and context data representing the situation of the user,
- an interface to a mobile communication network for sending task suggestion data to a device of a user via the mobile communication network and for receiving decision data representing a decision of the user on which task to perform
- a means for initiating execution of the task
